# EUROPEAN PATENT APPLICATION

(11) **EP 4 847 328 A2**
(43) Date of publication of application: **02.12.2026**
(21) Application number: 26181724.1
(22) Date of filing: 28.05.2026
(51) Int. Cl.: B60T 1/06, B60T 5/00, F16D 55/40, F16D 65/847

(54) **INTERNAL BRAKE AXLE**

(30) Priority: 29.05.2025 IT 202500012529
(71) Applicant: CARRARO S.p.A., 35011 Campodarsego (Padova) (IT)
(72) Inventor: Prospero, Roberto, 37129 Verona (IT)
(74) Representative: Locas, Davide

(57) **Abstract**

An internal brake axle (12) having a main body that defines a brake chamber (11) within it. The brake chamber (11) houses a dry brake having a brake disk (101), first and second friction elements (133,134), and first and second thrust elements (110,120). The axle also comprises ventilation means (161,162,163) adapted to convey air towards and/or away from the brake disk.

## Description

The present invention relates to an axle for industrial and agricultural vehicles comprising an internal brake.

### STATE OF THE ART

In the field of braking systems, various types of brakes are commonly used, including dry brakes and oil-immersed brakes. Each configuration is chosen according to specific application requirements and has well-known characteristics, advantages and drawbacks.

Dry brakes rely on direct friction between surfaces that are usually unlubricated, such as disks or drums, and the corresponding braking elements. This type is popular for its simple construction, low cost and ease of maintenance. However, these systems are particularly sensitive to external contaminants such as dust, mud or moisture, which can compromise braking performance. Furthermore, the dissipation of the heat generated during braking is limited, particularly during continuous use or under heavy loads, resulting in the risk of overheating and loss of performance.

An example of a dry brake is described in patent document CA2110996C, which discloses a dry brake mounted directly on the wheel hub. This positioning may expose the brake to the external environment and allow specially shaped surfaces to direct air towards the braking components, thereby aiding heat dissipation. However, in heavy-duty applications typical of operating and agricultural machinery, where the final drive ratio on the wheel is designed to maximise available torque rather than speed, a brake positioned in this way is subject to low rotational speeds and particularly high torques. This operating condition involves severe mechanical stresses, which can lead to accelerated wear of the brake itself, or at the very least be transmitted to adjacent components, with consequent risk of damage. Furthermore, a configuration of this kind can be difficult to implement on steering axles, and is therefore typically used on rigid axles.

In contrast, oil-immersed brakes operate with the friction members immersed in a lubricating fluid. This configuration allows for better heat dissipation, greater protection against external factors and, generally, a longer service life for components subject to wear. However, from a technical point of view, this configuration also has a number of drawbacks. In particular, oil-immersed brakes are generally more complex, requiring seals to contain the fluid, and are also more costly to maintain, especially in the event of leaks or failures. Furthermore, the amount of oil required for operation can be quite substantial, which has an impact on overall costs and increases the weight of the axle.

Another typical drawback of oil-immersed brakes is the loss of power that occurs even when the brakes are not being applied. The presence of rotating components immersed in an oil-filled chamber generates continuous frictional resistance, due to the fluid's viscosity, which absorbs energy and reduces the system's overall efficiency.

Despite these drawbacks, oil-immersed brakes are widely used in so-called internal brakes, i.e. in systems where the brake is located inside the axle, near the differential or other transmission components, and not directly on the wheel hub. In this context, it is possible to make use of the oil already provided for lubricating the differential, thereby optimising the overall design of the system.

Internal braking systems are particularly advantageous in applications that require high braking capacity, such as agricultural or industrial vehicles. In such applications, the brake is typically located within the axle, upstream of any planetary gearboxes fitted in the wheel hubs. This configuration allows the braking device to operate on a shaft that rotates at a higher speed than the wheel itself, i.e. before the final mechanical reduction. Consequently, for the same braking force required of the vehicle, the torque to be managed is lower, making it possible to use smaller braking components with improved thermal performance. This results in greater system efficiency, particularly under demanding operating conditions or during prolonged braking. However, the housing inside the axle can hinder the natural dissipation of the heat generated during braking, making it more difficult to maintain stable operating temperatures.

Given the current state of the art, there is therefore a clear need to develop an internal braking system that offers the advantages of existing solutions whilst addressing, at least in part, the issues highlighted above that are typical of the various possible brake configurations.

### SUMMARY OF THE INVENTION

It can be observed that in the present disclosure, as well as in the accompanying claims, certain terms and expressions are deemed to have, unless otherwise expressly indicated, the meaning expressed in the following definitions. In particular, the term "internal brake" in relation to a vehicle refers to a brake located inside an axle of the vehicle itself, preferably arranged distally to a wheel hub associated with the axle, and even more preferably proximally to a differential assembly.

The technical problem underlying the present invention is thus to provide an internal brake axle that is structurally and functionally designed to overcome, at least in part, one or more of the drawbacks mentioned above in relation to the mentioned prior art.

In particular, an object of the invention is to produce an internal brake axle that allows to effectively manage dissipation of the heat generated by braking.

A further object of the invention is to provide an internal brake axle that offers high efficiency and low consumption.

A further object of the invention is to provide an internal brake axle that allows for easy and rapid maintenance of the wear parts.

A further object of the invention is to provide an internal brake axle with reduced structural and manufacturing complexity.

A further object of the invention is to provide an internal brake axle offering a high level of operational safety.

This problem is at least partially resolved, and one or more of the aforementioned objects are achieved, at least in part, by the invention, in a first aspect thereof, by means of an internal brake axle for industrial and/or agricultural vehicles comprising a main body defining a brake chamber within it.

The internal brake axle also comprises a transmission shaft extending in the main body, thereby defining a first and a second end. Preferably, the first end is proximal to the brake chamber and is preferably configured to be coupled to the differential assembly of an industrial and/or agricultural vehicle. Preferably, the second end is distal to the brake chamber and is preferably configured to be coupled to a wheel hub of the aforementioned vehicle. The transmission shaft also defines an axial direction.

The internal brake axle comprises a dry brake, preferably housed in the brake chamber.

It should be noted that, in the context of the present invention, the term "dry brake" preferably refers to a brake in which the various components involved in the braking action are immersed in a gas, preferably air, and not in a lubricating liquid.

The dry brake, in turn, comprises a brake disk and a first friction element and, preferably, a second friction element, preferably arranged on opposite sides of the brake disk along the axial direction.

Preferably, the brake disk is rotatable about the axial direction in unison with the transmission shaft.

The dry brake comprises a first thrust element which is preferably slidable with respect to the transmission shaft along the axial direction. The first thrust element is preferably arranged in such a way that the first friction element is interposed between the first thrust element and the brake disk.

The first thrust element is preferably configured to be urged towards the brake disk, thereby applying a braking action, preferably by pressing the first friction element against the brake disk. The second friction element is preferably configured to withstand the thrust exerted by the first friction element on the brake disk following the braking action.

The dry brake preferably comprises a second thrust element which is slidable with respect to the transmission shaft along the axial direction. The second thrust element is preferably configured to be urged towards the first thrust element, so as to urge the first thrust element towards the brake disk.

The internal brake axle preferably comprises ventilation means configured to convey air towards and/or away from the brake disk.

It should be noted that the use of a dry brake makes it possible to significantly reduce the amount of oil required for the proper functioning of the axle, or, more generally, of the agricultural or industrial vehicle on which it is used.

As the brake chamber is located inside the main body, the risk of contamination from external particles is at least reduced, thereby improving brake performance and reducing wear.

The presence of a second thrust element, preferably used to provide the parking brake function, which acts on a first thrust element, preferably used to provide the service brake function, and which in turn acts on the friction elements, allows wear to be concentrated specifically on the friction elements. As these are separate from the thrust components, they are easier to replace, further simplifying axle maintenance and reducing the overall cost of such operation.

The presence of ventilation means allows the heat generated during braking to be effectively dissipated without the need to use oil, thereby enabling the full benefits of both a dry brake and an internal brake configuration to be exploited simultaneously.

It should also be noted that, as introduced in the prior art, the use of an internal brake axle offers numerous advantages. Firstly, the braking torque is applied to the transmission shaft before it is connected to the wheel hub, where, in industrial or agricultural applications, there is often an epicyclic reduction gear, which increases the effective braking torque transmitted to the wheel. In other words, for the same braking torque required by the wheel, the torque actually applied to the transmission shaft may be lower, thereby reducing the load on the axle. Furthermore, the use of an internal brake does not take up any space in the wheel hub area. For many off-highway vehicles, it is important to have a compact wheel hub to minimise the wheel's overall dimensions when steering. In fact, brakes mounted directly on the wheel typically require a longer lateral lever arm and therefore greater effort to steer.

Additionally, or alternatively to some of the features described above, the invention may comprise one or more of the features set out below.

In some embodiments, the dry brake comprises first resilient elements connected to at least one of the first friction element and the second friction element. The first resilient elements are preferably configured to act counter to a mutual approach of the first and second friction elements. This ensures that, following a braking action, the system returns to an operating condition in which the first thrust element is moved away from the brake disk, as are the first and second friction elements.

Preferably, the first resilient elements are simultaneously connected to both the first and second friction elements. This results in a particularly compact and efficient configuration.

In some embodiments, the dry brake comprises first hydraulic actuation means configured to urge the first thrust element towards the brake disk. Preferably, the first hydraulic actuation means comprise a service-brake actuation chamber delimited by at least a portion of the first thrust element and by at least a portion of the main body within the brake chamber. The service-brake actuation chamber is preferably configured to receive pressurised fluid in such a way as to urge the first thrust element towards the brake disk. Consequently, when the first hydraulic actuation means are activated, this results in a braking force being applied to the brake disk, and thus to the transmission shaft.

In some embodiments, the dry brake comprises second resilient elements, preferably connected to the second thrust element, configured to urge the second thrust element towards the first thrust element.

In some embodiments, the dry brake comprises second hydraulic actuation means configured to urge the second thrust element away from the first thrust element. Preferably, the second hydraulic actuation means comprise a release chamber delimited by at least a portion of the second thrust element and by at least one further portion of the main body located within the brake chamber. The release chamber is preferably configured to receive pressurised fluid in such a way as to urge the second thrust element away from the first thrust element, preferably counteracting the action of the second resilient elements.

This configuration helps to improve the overall safety of the braking system. The second resilient elements, in fact, passively hold the second thrust element - which, as noted, is intended primarily to act as a parking brake - in the activation position. The combination of the second resilient elements and the corresponding hydraulic actuation means results in passive braking behaviour; in other words, hydraulic activation of the second thrust element causes it to release. In the event of malfunctioning, such as a loss of oil pressure, the system automatically engages the brakes, making it inherently safer than configurations in which a fault would cause the brakes to disengage.

In some embodiments, the ventilation means comprise a plurality of protrusions extending circumferentially around the brake disk. The plurality of protrusions is configured to generate an airflow through the rotation of the brake disk.

This promotes more effective dissipation of the heat generated during braking, helping to circulate air within the brake chamber.

In some embodiments, the main body comprises an access window near the first and second friction elements. The access window should preferably be fitted with a cover configured to be reversibly openable so as to, following opening thereof, enable access from outside the main body to the first and second friction elements. This allows quick and easy access to the brake chamber, making maintenance operations straightforward, particularly the replacement of friction components when they become worn. It should be noted that this level of accessibility and ease of maintenance would not be as readily achievable in an oil-immersion system.

In some embodiments, the ventilation means comprise one or more slots configured to allow air exchange between the interior and exterior of the brake chamber, preferably between the interior of the brake chamber and the exterior of the main body. These slots promote air circulation within the brake chamber, improving heat dissipation whilst maintaining a degree of protection against the infiltration of foreign bodies into the brake chamber.

Preferably, the slot or slots are defined on the cover of the access window, so as to allow air to pass through the cover itself.

In some embodiments, the ventilation means comprise a recirculation channel having a first passage cross-section facing the brake disk and a second passage cross-section facing a predefined internal zone of the main body, the second passage cross-section is preferably spaced apart from the first passage cross-section along the axial direction.

Preferably, the recirculation channel is configured to allow therein passage of air away from and/or towards the brake disk towards and/or away from the predefined internal zone of the main body.

These configurations help to circulate air within the axle, improving the efficiency of braking heat dissipation. Furthermore, these solutions help to improve air circulation preventing, or at least reducing, any contamination of the air inside the axle by foreign bodies.

In some embodiments, the ventilation means comprise a heat exchanger positioned along the recirculation channel, preferably outside the main body. The heat exchanger is preferably designed to allow, or facilitate, heat exchange between a flow of air passing through the recirculation channel and a fluid external to the main body of the axle. This obviously helps to dissipate heat away from the axle, thereby improving the temperature control of the braking components.

In some embodiments, the main body defines a hollow transmission chamber preferably interposed between the brake chamber and the second end of the transmission shaft. Preferably, the predefined internal zone of the main body is defined in the transmission chamber. Preferably, the recirculation duct is designed to allow air to circulate between the brake chamber and the transmission chamber.

In some embodiments, the first passage cross-section is defined on the cover of the access window. Preferably, at least a portion of the recirculation duct passes through the cover. This configuration is particularly advantageous because it allows air to circulate between the brake chamber and the predefined internal zone of the main body, whilst keeping the recirculation duct, at least partially, outside the main body, thereby facilitating heat dissipation to the outside.

In some embodiments, the dry brake comprises an additional first friction element and an additional second friction element arranged on opposite sides of the brake disk. The additional first friction element is preferably positioned radially opposed to the first friction element with respect to the axial direction. Preferably, the additional second friction element is also radially opposed to the second friction element with respect to the axial direction.

Preferably, the main body comprises an additional access window near the additional first and second friction elements. The additional access window is preferably radially opposing the access window with respect to the axial direction. The additional access window comprises an additional cover configured to be reversibly openable so as to, following opening thereof, enable access from outside the main body to the additional first and second friction elements.

In some embodiments, the ventilation means comprise one or more additional slots configured to allow air exchange between the interior and exterior of the brake chamber, preferably between the interior and exterior of the main body. The combined effect of one or more slots and one or more additional slots improves the efficiency of braking heat dissipation.

Preferably, one or more additional slots is/are provided on the additional cover.

In some embodiments, the ventilation means comprise an additional recirculation channel having a further first passage cross-section facing the brake disk. Preferably, the additional first passage cross-section is defined on the additional cover. The additional recirculation channel has an additional second passage cross-section facing into the predefined internal zone of the main body, or into another predefined internal zone of the main body. This configuration allows for the creation of a ventilation circuit between the brake chamber containing the brake disk and the predefined internal zone of the main body and/or the additional predefined internal zone of the main body, ensuring air recirculation that aids heat dissipation, preferably avoiding, or at least reducing, the contamination of air inside the axle with air from outside the axle. Preferably, the additional recirculation channel comprises an additional heat exchanger. The additional heat exchanger is preferably configured to allow, or facilitate, heat exchange between a flow of air passing through the additional recirculation channel and a fluid external to the main body of the axle.

In some embodiments, the ventilation means comprise forced recirculation components, such as a compressor and/or a pump, preferably outside the main body, or more generally preferably outside the brake chamber.

In some embodiments, the brake disk may be a ventilated brake disk. It should be noted that, in the context of the present invention, the term "ventilated brake disk" preferably refers to a brake disk comprising a pair of annular braking surfaces arranged in parallel and spaced apart by a plurality of internal fins that define ventilation channels. The fins are designed to promote the flow of cooling air through the disk as it rotates, thereby improving heat dissipation and reducing thermal deformation during braking.

### DETAILED DESCRIPTION OF PREFERRED EMBODIMENTS

The features described above, as well as further features and the advantages of the invention, will be better understood from the detailed description of certain embodiments illustrated, by way of non-limiting example, with reference to the accompanying drawings, in which:
- Figure 1 is a perspective view of an internal brake axle in accordance with a first preferred embodiment of the present disclosure, shown connected to a differential assembly and a wheel hub;
- Figure 2 is a further perspective view of the axle shown in Figure 1;

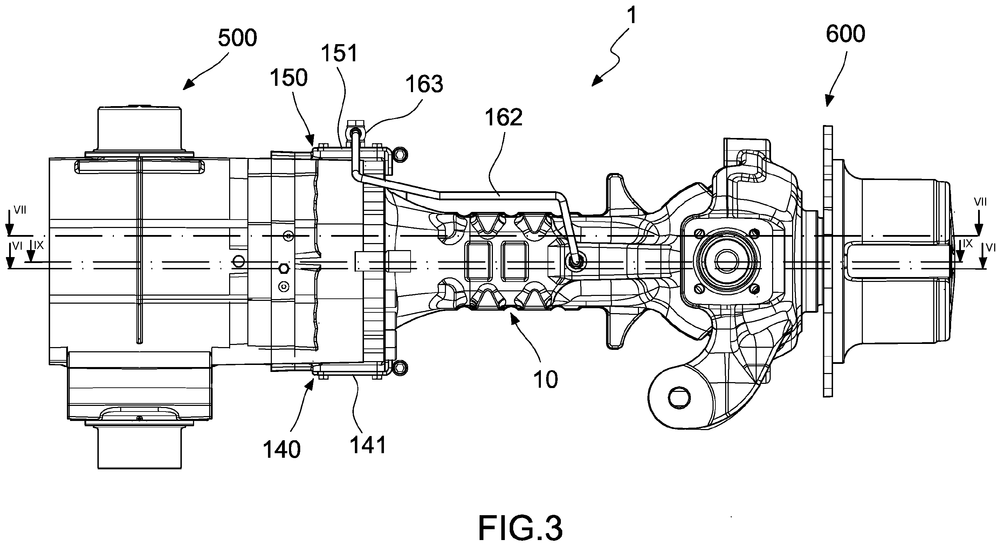

- Figure 3 is a plan view of the axle shown in Figure 1;

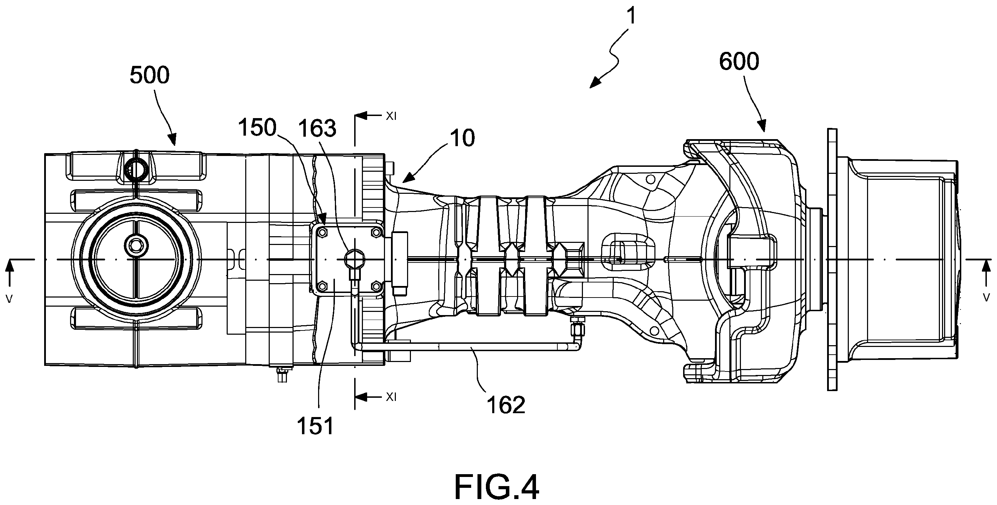

- Figure 4 is a further plan view of the axle shown in Figure 1;
- Figure 5 is a partial plan view of a section obtained by sectioning the axle shown in Figure 4 along line V-V;
- Figure 6 is a partial plan view of a section obtained by sectioning the axle shown in Figure 3 along line VI-VI;
- Figure 7 is a partial plan view of a section obtained by sectioning the axle shown in Figure 3 along line VII-VII;
- Figures 8A and 8B are detailed exploded perspective views of the main components of a dry brake in accordance with a first embodiment of the present invention;
- Figure 9 is a partial plan view of a section obtained by sectioning the axle shown in Figure 3 along line IX-IX;
- Figure 10A is a partial perspective view of a detail of the axle shown in Figure 2.
- Figure 10B is an exploded view of the detail shown in Figure 10A;
- Figure 11 is a partial plan view of a section obtained by sectioning the axle in Figure 4 along line XI-XI;

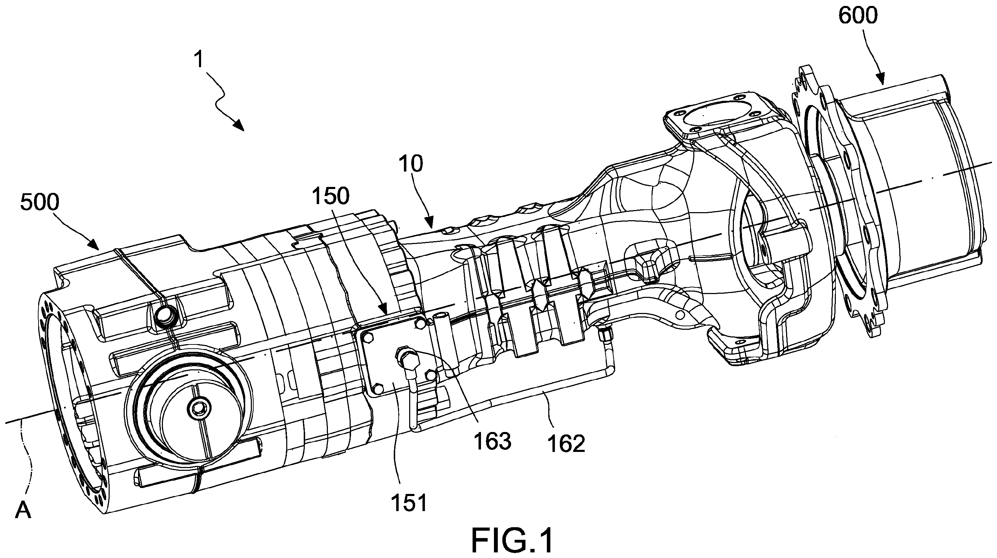

Referring initially to Figure 1, reference number 1 generally denotes an internal brake axle for industrial and/or agricultural vehicles.

The axle 1 comprises a main body 10 configured to be interposed between a differential assembly 500 and a wheel hub 600 of an industrial and/or agricultural vehicle.

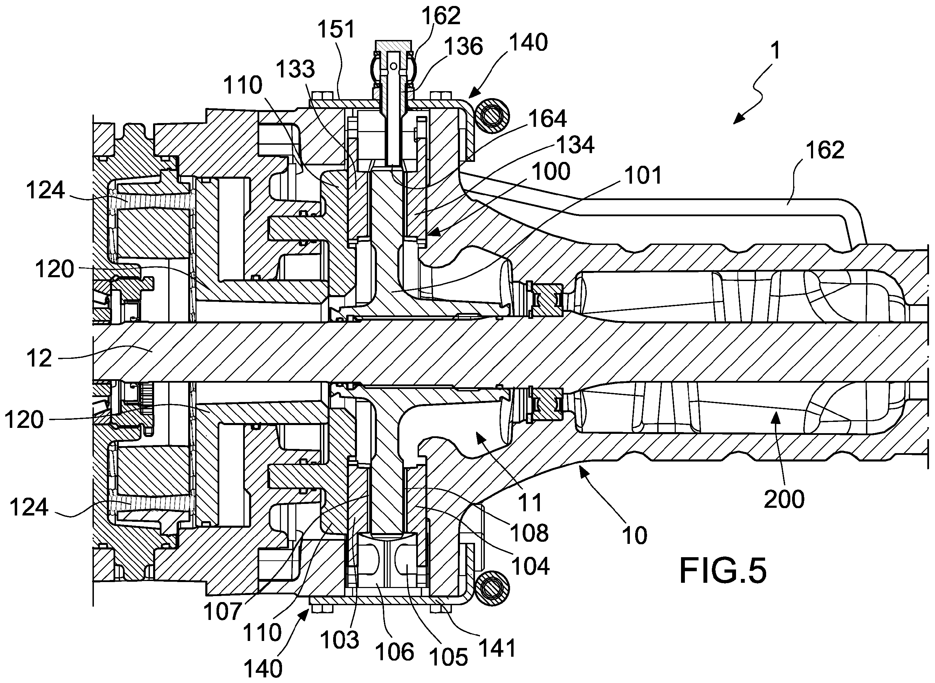

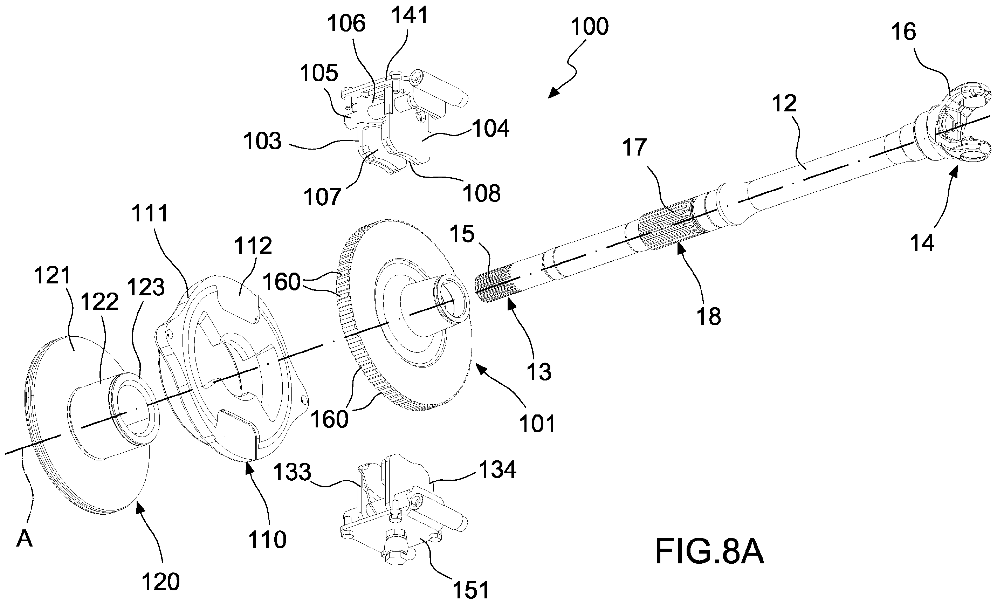

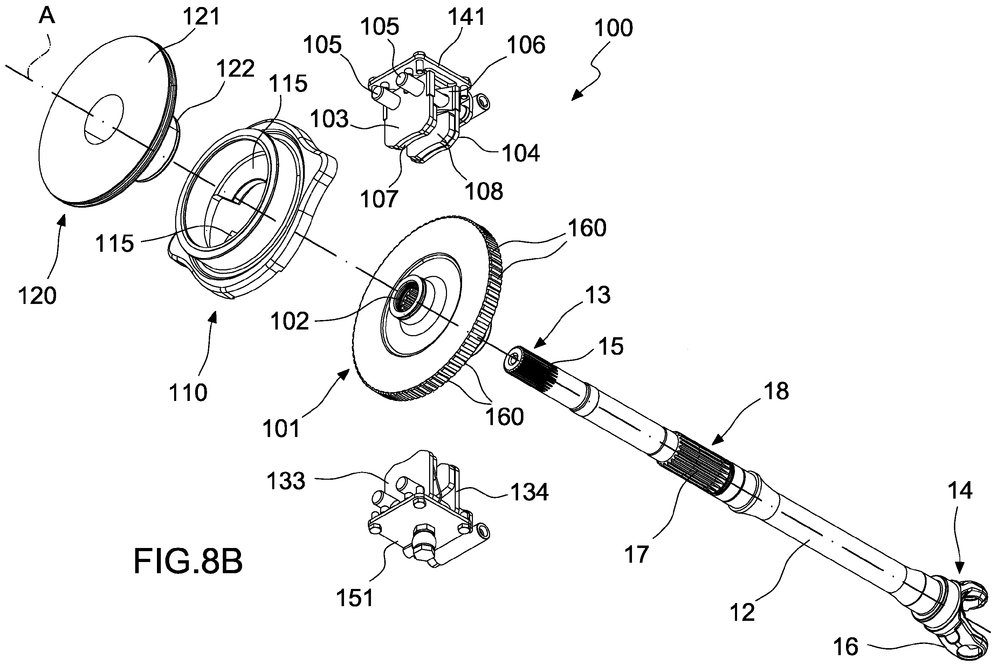

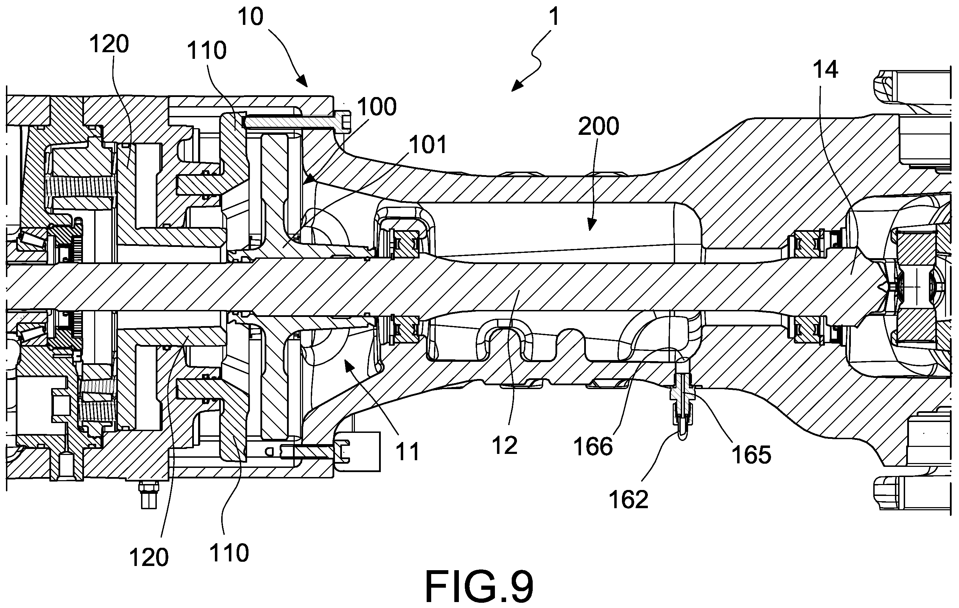

Referring to Figure 5, it is observed that the main body 10 internally defines a brake chamber 11. The axle 1 also comprises a transmission shaft 12 which extends in the main body 10 such that it defines a first end 13 and a second end 14, as shown in Figures 8A and 8B. The first end 13 is proximal to the brake chamber 11 and is configured to be coupled to the differential assembly 500, for example by means of a toothing 15. The second end 14 is distal to the brake chamber 11 and is configured to be coupled to the wheel hub 600, for example via a universal joint 16. The transmission shaft 12 also defines an axial direction *A*. As shown in Figure 9, the main body 10 also internally defines a hollow transmission chamber 200, interposed between the brake chamber 11 and the second end 14 of the shaft 12.

Referring once again to Figure 5, note that the internal brake axle 1 comprises a dry brake 100 housed in the brake chamber 11. The dry brake 100 comprises a brake disk 101 connected to the shaft 12 in such a way as to rotate in unison with the latter about the axial direction A. In some embodiments, as shown in Figure 8B, the brake disk 101 is connected to the shaft 12 by means of an internal toothing 102 formed on the central bore of the disk 101 and a corresponding toothing 17 formed on a portion 18 of the outer surface of the shaft 12, configured in such a way as to ensure an integral rotational coupling between the disk 101 and the shaft 12, whilst allowing relative axial sliding of the disk 101 along the shaft 12. In embodiments not shown, the brake disk may be formed as a single piece with the transmission shaft, or it may be connected to the latter by other methods that are well known.

With reference to Figure 5, it can be seen that the dry brake 100 also comprises a first friction element 103 and a second friction element 104, which are arranged on opposite sides of the disk 101 with respect to the axial direction A. Each of the first and second friction elements 103 and 104 comprises a respective brake pad 107 and 108, each of which is adapted to come into contact with a respective surface portion of the brake disk 101 during actuation of the dry brake 100. The first and second friction elements 103 and 104 are also arranged on guide pins 105 in such a way that the first friction element 103 can slide along the axial direction *A*, allowing it to be moved closer towards and away from the brake disk 101. More generally, the first and second friction elements 103 and 104 can be brought closer together, so as to compress the brake disk 101 between them and produce a braking action. It may also be provided that a first resilient element 106 is interposed between the first and second friction elements 103 and 104, so as to act counter to a mutual approach of the aforementioned friction elements 103 and 104. Overall, the first resilient element helps to release the dry brake 100 when it is not engaged.

It should also be noted that, in preferred embodiments, the dry brake 100 also comprises an additional pair of friction elements, specifically an additional first friction element 133 and an additional second friction element 134. The additional friction elements 133 and 134 can be configured in a similar manner to the first and second friction elements 103 and 104, and are radially opposing the latter with respect to the axial direction A, as shown in Figure 5.

The dry brake 100 comprises a first thrust element 110 that slides with respect to the shaft 12 along the axial direction A and arranged such that the first friction element 103 is interposed between the brake disk 101 and the aforementioned first thrust element 110.

As shown in Figure 8A, the first thrust element 110 comprises a first disk-like body 111 having a front face facing the brake disk 101, on which a first abutment surface 112 is defined, designed to abut against the first friction element 103. The first thrust element 110 is configured to be urged towards the brake disk 101, so as to press the first friction element 103 against the aforesaid disk 101. In particular, since the brake disk 101 is at least partially slidable along the shaft 12, the pressure exerted by the first friction element 103 on the disk 101 causes the latter to slide towards the second friction element 104. In other words, by applying pressure to the first thrust element 110 as it approaches the brake disk 101, the aforesaid disk 101 is compressed between the first and second friction elements 103 and 104, exerting a braking action that is transmitted from the disk 101 to the shaft 12 via the engagement of the respective toothings 102 and 17.

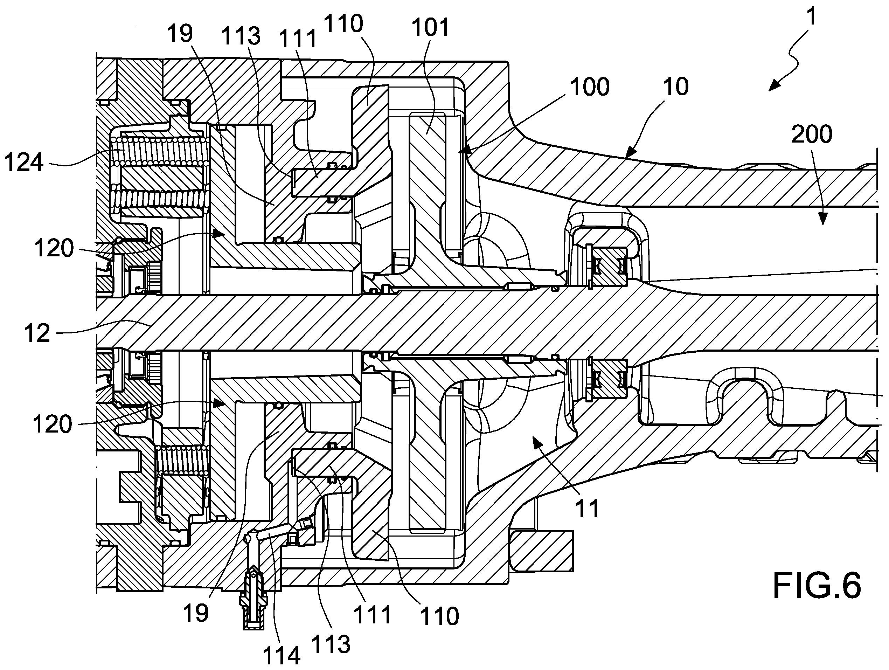

It is advantageous for the first thrust element 110 to be activated during service braking, and it can be activated, that is, urged towards the disk 101, according to different embodiments. For example, referring to Figure 6, the dry brake 100 comprises first hydraulic actuation means configured to urge the first thrust element 110 towards the disk 101. These first hydraulic actuation means comprise a service-brake actuation chamber 113 delimited by a body portion 19 integral with the main body 10 and by a portion of the first disk-like body 111. The chamber 113 is configured to receive pressurised fluid via a dedicated service channel 114.

With particular reference to Figures 5, 8A and 8B, it can be seen that the dry brake 100 also comprises a second thrust element 120 which is slidable with respect to the shaft 12 along the axial direction *A* and arranged such that the first thrust element 110 is substantially interposed between the second thrust element 120 and the brake disk 101. The second thrust element 120 comprises a second disk-like body 121 from which a cylindrical portion 122 projects. The cylindrical portion 122 defines, at a free end thereof opposite the body 120, an own abutment surface 123 adapted to abut on a second abutment surface 115 of the first thrust element 110.

The second thrust element 120 is configured to be urged towards the first thrust element 110 in such a way as to, in turn, urge the first thrust element 110 towards the brake disk 101. Thus, when the second thrust element 120 is actuated, that is, when it is urged towards the first thrust element 110, a braking action is generated in a manner similar to that described above. Specifically, the second thrust element 120, when actuated, urges the first thrust element 110, which in turn pushes the first friction element 103 against the disk 101, compressing the brake disk 101 between the friction elements 103, 104 or, more precisely, between the respective brake pads 107 and 108.

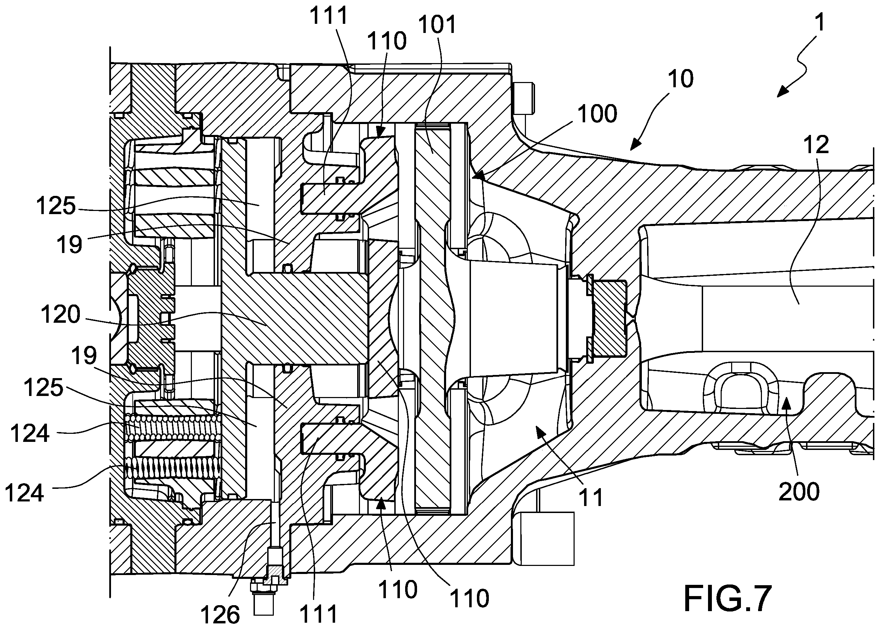

Referring to Figure 7, the dry brake 100 comprises second resilient elements 124, consisting of a plurality of springs, each connected to the second disk-like body 121 and to a portion of the main body 10. These second resilient means 124 are configured to urge the second thrust element 120 towards the first thrust element 110. In other words, the second resilient means 124 are such that they maintain the braking action by pressing the second thrust element 120 against the first thrust element 110 and preventing the two from moving apart.

In order to release the braking action produced by the second thrust element 120, it is advantageous for the dry brake 100 to comprise second hydraulic actuation means configured to urge the second thrust element 120 away from the first thrust element 110, overcoming the elastic force of the second resilient means 124. Referring again to Figure 7, it can be seen that the second hydraulic actuation means may, for example, comprise a release chamber 125 delimited by the portion of the body 19 integral with the main body 10 and by a portion of the second thrust element 120. The release chamber 125 is configured to receive pressurised fluid via a dedicated release channel 126.

As mentioned earlier, this type of configuration provides a particularly safe braking system. In fact, should there be a loss of pressure in the operating fluid of the thrust elements 110 and 120, the plurality of springs comprising the second resilient means 124 would cause the dry brake 100 to engage. In this way, the internal brake axle 1 is inherently safer than configurations in which a fault would cause the brake to disengage.

In some embodiments, the second thrust element 120 can be used as a service brake; however, due to its negative-control operation, it is particularly advantageous to use it as a parking brake. If necessary, in the event of a failure of the main braking system, it can still be used as an emergency brake.

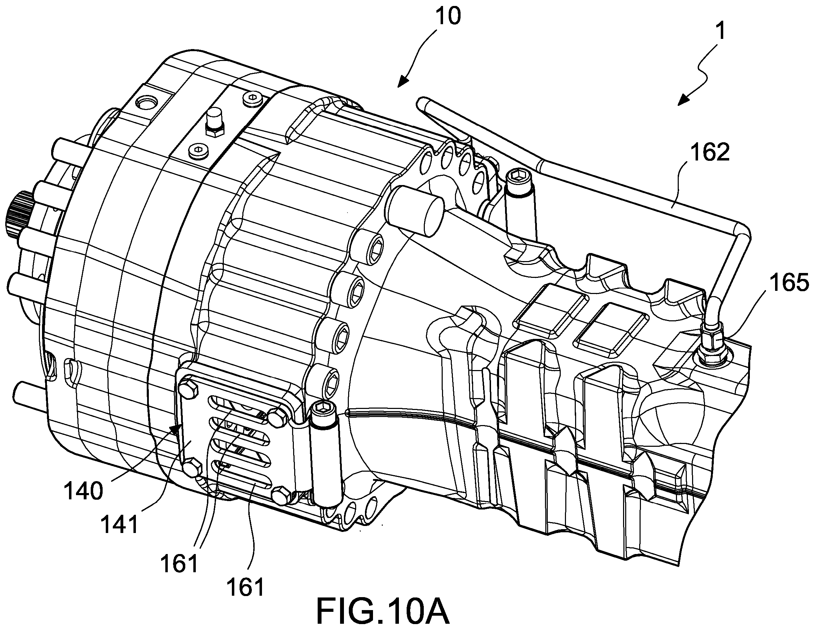

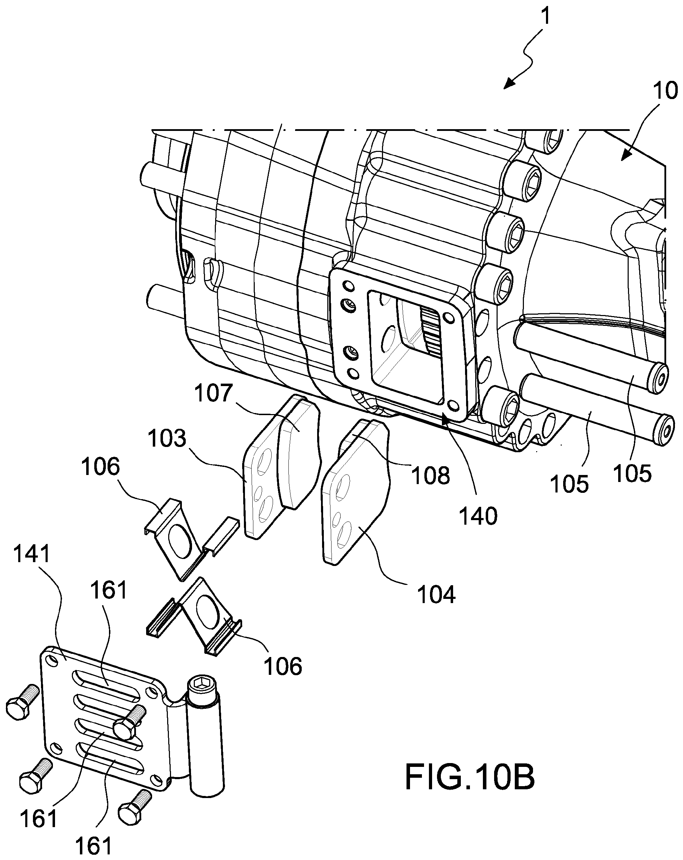

Referring to Figure 5, it can be noted that the main body 10 comprises an access window 140 near the friction elements 103, 104 and a further access window 150 near the additional friction elements 133, 134. The access window 140 also comprises a cover 141. As can be seen by comparing Figures 10A and 10B, the cover 141 is configured to be reversibly openable or removable, so that, once opened, it allows access to the friction elements 103 and 104, thus simplifying their replacement and/or maintenance following their wear. In exactly the same way, the additional access window 150 also comprises its own cover, which will hereinafter be referred to as the additional cover 151, as shown, for example, in Figure 1. The additional cover 151 is configured to be reversibly openable, or removable, so as to allow, following its opening, access to the further friction elements 133 and 134, thereby simplifying their replacement and/or maintenance following their wear.

The internal brake axle 1 also comprises ventilation means configured to direct air towards and/or away from the brake disk 101, so as to dissipate the heat generated during braking from the latter.

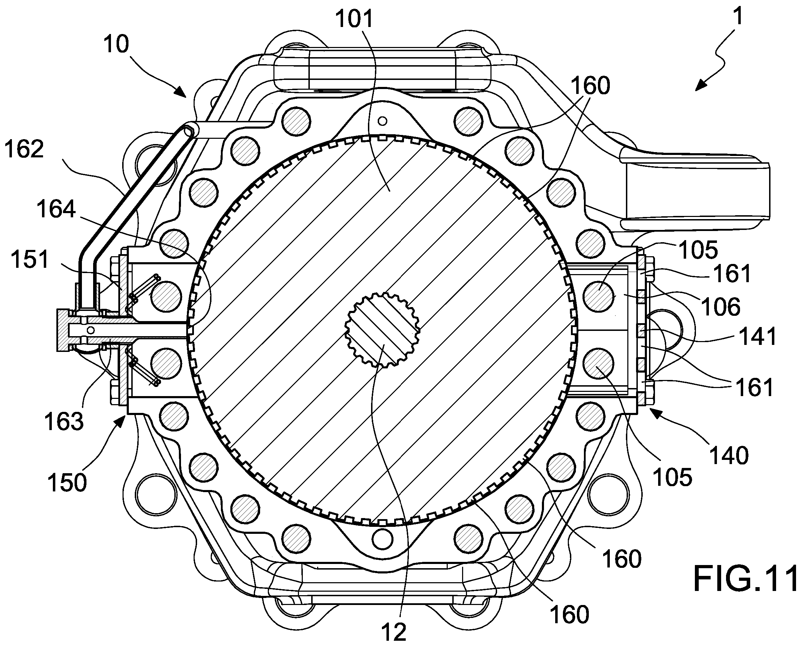

Referring to Figure 11, in some embodiments, the ventilation means comprise a plurality of protrusions 160 extending circumferentially around the brake disk 101, projecting radially with respect to the axial direction *A*. The plurality of protrusions 160 is configured to generate an airflow through the rotation of the brake disk 101 itself. This airflow promotes convective heat transfer between the air contained within the brake chamber 11 and the brake disk 101, thereby improving the latter's heat dissipation.

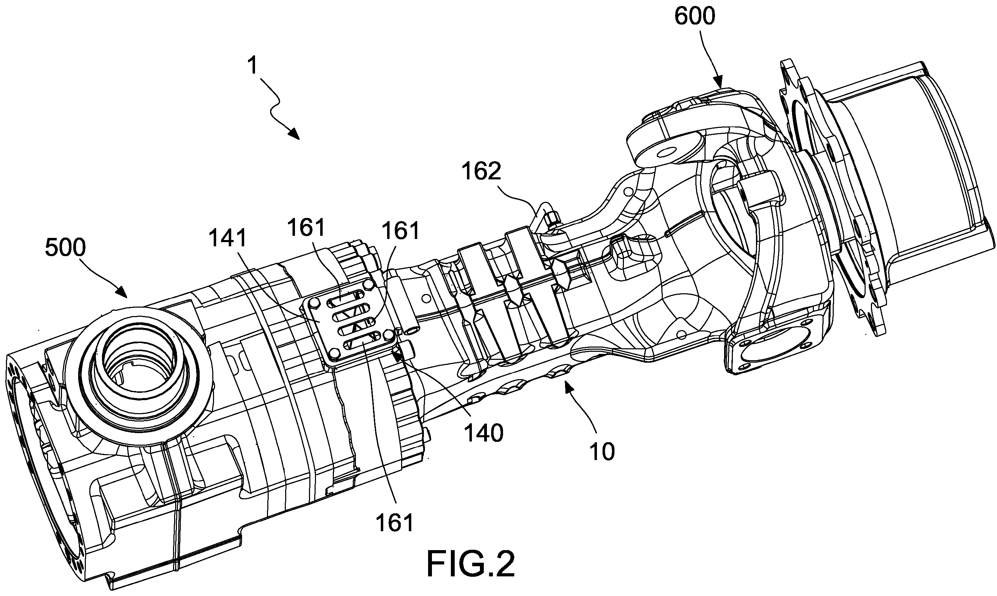

With reference to Figure 2, it can be seen that, in some embodiments, the ventilation means may comprise a plurality of slots 161 formed on the cover 141 and configured to allow air exchange between the interior and exterior of the brake chamber 11, more precisely between the interior of the brake chamber 11 and the environment outside the main body 10.

With reference instead to Figure 1, in some embodiments the ventilation means comprise a recirculation channel 162 having a first portion 163 that passes through the additional cover 151. As shown in Figure 5, the first portion 163 of the channel 162 ends in a first passage cross-section 164 facing the brake disk 101.

The recirculation channel 162 may be used as an alternative to the slots shown in Figure 2 or, if necessary, in conjunction with them.

Referring now to Figure 9, it is noted that the channel 162 also comprises a second portion 165 that passes through the main body 10. The second portion 165 ends with a second passage cross-section 166 facing inwards towards the transmission chamber 200. Overall, the recirculation channel 162 enables air to be recirculated between the brake chamber 11 and the transmission chamber 200. In embodiments not shown, the ventilation means may comprise a heat exchanger positioned along the recirculation channel, preferably outside the main body, so as to allow or facilitate the dissipation of heat to the outside of the axle. In other words, this heat exchanger is configured to allow heat exchange between the air circulating within the channel itself and a fluid - typically air - external to the axle, preferably without the two mixing.

Referring to Figure 11, note that, as a result of the rotation of the brake disk 101, the plurality of protrusions 160 is adapted to perform an action such as to draw and/or push air from and/or towards the recirculation channel 162 and/or the plurality of slots 161.

As mentioned above, in some embodiments, instead of a recirculation channel, the ventilation means may have additional slots formed on the additional cover of the additional access window.

In other embodiments, the ventilation means may not comprise any slots, but may instead comprise a pair of recirculation ducts, each having a first passage cross-section facing the brake disk and a second passage cross-section facing inwards towards the transmission chamber. Preferably, each recirculation channel should pass through its own heat exchanger outside the main body and configured to exchange heat with the outside environment, or both channels should pass through the same heat exchanger. It is also advantageous that the transmission chamber and the brake chamber are in fluid communication only via the pair of recirculation channels. This configuration allows for the effective dissipation of heat accumulated by the brake disk during braking towards the outside, whilst also preventing contamination of the air inside the brake and transmission chambers.

In some embodiments not shown here, one of the two covers may lack ventilation means, whilst the other may have either the plurality of slots or the recirculation channel.

Overall, an axle manufactured in accordance with this disclosure enables the problem described to be solved, whilst at the same time offering a number of advantages. In particular, it reduces the amount of oil required for the brake to function and effectively manages the dissipation of heat generated during braking.

Naturally, in order to meet specific and contingent application needs, a person skilled in the art will be able to make further modifications and variants to the disclosure described above that are nevertheless within the scope of protection as defined by the following claims.

## Claims

1. An internal brake axle (1) for industrial and agricultural vehicles, comprising:
• a main body (10) which defines therein a brake chamber (11);
• a transmission shaft (12) extending in the main body so as to define a first end (13) proximal to the brake chamber (11) and configured to be coupled to a differential assembly (500) of an industrial and/or agricultural vehicle, and a second end (14) distal to the brake chamber (11) and configured to be coupled to a wheel hub (600) of the vehicle, the transmission shaft (12) defining an axial direction (A);
• a dry brake (100) received in the brake chamber (11) and comprising:
- a brake disk (101);
- a first friction element (103) and a second friction element (104) which are arranged at opposite sides of the brake disk (101) in the axial direction (A);
- a first thrust element (110) which can slide with respect to the transmission shaft (12) in the axial direction (A) and which is arranged so that the first friction element (103) is interposed between the first thrust element (110) and the brake disk (101), the first thrust element (110) being configured to be urged towards the brake disk (101) applying a braking action;
- a second thrust element (120) slidable with respect to the transmission shaft (12) in the axial direction (A) and configured to be urged towards the first thrust element (110) so as to urge the first thrust element (110) towards the brake disk (101);
• ventilation means configured to convey air towards and/or away from the brake disk (101).

2. An internal brake axle (1) according to the preceding claim, wherein the dry brake (100) comprises first resilient elements (106) connected to at least one of the first and second friction elements (103, 104) and configured to act counter to a mutual approach of the first and second friction elements (103, 104).

3. An internal brake axle (1) according to claim 1 or 2, wherein the dry brake (100) comprises first hydraulic actuation means configured to urge the first thrust element (110) towards the brake disk (101).

4. An internal brake axle (1) according to any one of the preceding claims, wherein the dry brake (100) comprises second resilient elements (124) configured to urge the second thrust element (120) towards the first thrust element (110).

5. An internal brake axle (1) according to any one of the preceding claims, comprising second hydraulic actuation means configured to urge the second thrust element (120) away from the first thrust element (110).

6. An internal brake axle (1) according to any one of the preceding claims, wherein the ventilation means comprise protrusions (160) which extend circumferentially relative to the brake disk (101), the plurality of protrusions (160) being configured to generate an air flow by means of rotation of the brake disk.

7. An internal brake axle (1) according to any one of the preceding claims, wherein the main body (10) comprises an access window (140; 150) near the first and second friction elements (103, 104), the access window (140; 150) having a cover (141; 151) configured to be reversibly openable so as to, following opening thereof, enable access from outside to the first and second friction elements (103, 104).

8. An internal brake axle (1) according to any one of the preceding claims, wherein the ventilation means comprise one or more slots (161) configured to allow air exchange between the interior and exterior of the brake chamber (11).

9. An internal brake axle (1) according to claims 7 and 8, wherein the one or more slots (161) is/are defined on the cover (141) and allow air to pass through the cover (141).

10. An internal brake axle (1) according to any one of the preceding claims, wherein the ventilation means comprise a recirculation channel (162) having a first passage cross-section (164) which faces the brake disk (101) and a second passage cross-section (166) in a predefined internal zone of the main body (10), the predefined internal zone being axially spaced apart from the first passage cross-section (164), the recirculation channel (162) being configured to allow therein passage of air away from and/or towards the brake disk (101) towards and/or away from the predefined internal zone of the main body (10).

11. An internal brake axle (1) according to the preceding claim, wherein the ventilation means comprise a heat exchanger positioned along the recirculation channel (162) and configured to allow heat exchange between an air flow which passes into the recirculation channel (162) and a fluid external to the main body (10).

12. An internal brake axle (1) according to claim 10 or 11, wherein the main body (10) defines therein a hollow transmission chamber (200) interposed between the brake chamber (11) and the second end (14), and wherein the predefined internal zone of the main body (10) is defined in the transmission chamber (200).

13. An internal brake axle (1) according to claim 7 and any one of claims 9 to 11, wherein the first passage cross-section (164) is defined in the cover (151).

14. An internal brake axle (1) according to any one of the preceding claims, wherein the dry brake (100) is arranged in a distal position with respect to the second end (14) configured to be coupled to the wheel hub (600) and proximal to the first end (13) configured to be coupled to the differential assembly (500).
